(19) Europäisches Patentamt
European Patent Office
Office européen des brevets

(11) EP 0 714 861 B1

(12) **FASCICULE DE BREVET EUROPEEN**

(45) Date de publication et mention
de la délivrance du brevet:
**13.08.1997 Bulletin 1997/33**

(51) Int. Cl.$^6$: **C03B 37/15**, G02B 6/28

(21) Numéro de dépôt: **95402672.0**

(22) Date de dépôt: **27.11.1995**

(54) **Procédé de fabrication de fibres étirées selon un profil prédéterminé**

Verfahren zur Herstellung getreckten Fasern mit vorbestimmtem Profil

Method for the manufacture of stretched fibres having a tailored profile

(84) Etats contractants désignés:
**DE GB**

(30) Priorité: **28.11.1994 FR 9414236**

(43) Date de publication de la demande:
**05.06.1996 Bulletin 1996/23**

(73) Titulaire: **FRANCE TELECOM**
**75015 Paris (FR)**

(72) Inventeur: **Rivoallan, Loic,**
**Cabinet Ballot-Schmit**
**F-94230 Cachan (FR)**

(74) Mandataire: **Schmit, Christian Norbert Marie**
**Cabinet BALLOT-SCHMIT,**
**16, avenue du Pont Royal**
**94230 Cachan (FR)**

(56) Documents cités:
**EP-A- 0 148 569**          **EP-A- 0 369 329**
**US-A- 4 765 816**

• **ELECTRONICS W LETTERS, vol. 27, no. 18, 29
Août 1991 STEVENAGE;GB, pages 1654-1656,
R.P. KENNY ET AL 'CONTROL OF OPTICAL
FIBRE TAPER SHAPE'**

## Description

L'invention concerne un procédé de réalisation de fibres optiques étirées selon un profil prédéterminé que l'on souhaite obtenir.

Ce procédé peut être intéressant dans certaines applications et notamment pour l'optique guidée dans les fibres. L'invention s'applique particulièrement dans le cas de fibres monomodes.

Le procédé selon l'invention peut s'appliquer à la fabrication de dispositifs tels que des filtres par interférences entre modes, des coupleurs fondus étirés, des senseurs à absorption de surface. Ces dispositifs sont généralement constitués de trois sections. La première, en fibres étirées, permet de coupler la puissance du mode de la fibre vers une deuxième partie, de diamètre inférieur à la fibre de départ, où un ou plusieurs modes se propagent à des vitesses différentes. La troisième section est une autre section effilée permettant de revenir au diamètre de fibre d'origine. Cependant, l'invention peut également s'appliquer pour modifier le diamètre du mode guidé par la fibre, la partie utile n'étant alors que la première section.

De nombreux procédés de fabrication de fibres étirées ont déjà été mis en oeuvre en vue de réaliser soit des coupleurs, soit des filtres modaux, mais aucun d'entre eux ne permettait de réaliser de façon très précise un étirage selon un profil désiré. Ces procédés décrivaient les moyens de minimiser les pertes optiques des dispositifs et les moyens d'éviter les pentes critiques qui conduisent à des couplages vers des modes d'ordre élevé non récupérables en sortie de dispositif.

Cependant, dans la publication de Kenny R.P., Birks T.A., Oakley K.P. intitulée "Control of optical fibre taper shape", Electron. lett., 1991, 27, pp 1654-1656, il est décrit un procédé d'étirage contrôlé de fibres optiques.

Dans ce système, on part d'un modèle. Ce modèle est obtenu par une loi f de variation du rayon r de la fibre en fonction de son élongation x telle que r=f(x) . On chauffe la fibre sur une longueur fixée L et on tire à chaque bout pour provoquer l'élongation x voulue pour que la valeur du rayon r de la fibre obéisse à la loi de variation r=f(x) définissant le modèle choisi.

Ce document décrit en outre une généralisation du modèle consistant à dire que l'élongation x entraîne une variation de la longueur fixée L puisque la fibre s'est allongée. La fibre étant statique, la variation de longueur L ne peut se situer que dans l'espace, elle ne peut en aucun cas se situer dans le temps. La longueur fixée L est également très dépendante de la largeur de flamme du chalumeau utilisé ou du déplacement du chalumeau si ce dernier est mobile.

Dans tous les cas, l'étirage est très limité sur une longueur figée de fibre puisqu'il n'y a pas d'apport de matière au cours de l'étirage. En outre cette technique nécessite l'utilisation d'un modèle préétabli.

Cette technique est complexe et ne permet pas en outre d'obtenir toute la précision désirée pour le profil obtenu. La présente invention permet de remédier à ce problème. Elle a pour objet un procédé d'étirage contrôlé d'une ou plusieurs fibres optiques selon un profil désiré obéissant à une loi f de variation telle que $D_s=f(x_s)$ dans laquelle $x_s$ représente les positions variables dans le temps de la fibre en sortie de four.

Ainsi on obtient le profit désiré avec une grande précision sans limite sur la longueur de fibre utilisée.

L'invention a plus particulièrement pour objet un procédé d'étirage contrôlé d'une ou plusieurs fibres optiques comportant les étapes suivantes :

- imposer une vitesse $V_e = dx_e/dt$ de défilement de la fibre entrant dans un four, où $dx_e$ représente le déplacement de la fibre en entrée de four,
- choisir une loi f de variation du diamètre $D_s$ de la fibre en sortie de four telle que $D_s=f(x_s)$ dans laquelle $x_s$ représente les positions, variables dans le temps, de la fibre en sortie de four,
- calculer, par incrémentations successives, des déplacements $dx_s$ de la fibre en sortie de four de manière à opérer des étirements sur la fibre pour modifier à chaque fois le diamètre $D_s$ de la fibre en sortie de four, de façon à suivre le profit défini par la loi f de variation,

et dans lequel, pour opérer ces étirements sur la fibre,

- on détermine une première valeur du diamètre $D_s$ de la fibre en sortie de four, à partir de la loi f établie, en fonction de la position $x_s$ de la fibre en sortie de four,
- on détermine le déplacement $dx_s$, pour réaliser un étirement de la fibre en sortie de four correspondant à cette valeur, à partir de la valeur de la vitesse $dx_e$ de défilement de la fibre en entrée de four et de la valeur du diamètre $D_s$ précédemment calculé,
- on détermine une nouvelle position $x_s$ de la fibre en sortie de four par incrémentation de la valeur du déplacement $dx_s$ précédemment calculé,
- on réitère les opérations jusqu'à l'obtention du profil désiré.

L'invention a également pour objet un dispositif de mise en oeuvre du procédé comprenant un four et des moyens de déplacement de la fibre pilotés par un premier calculateur qui asservi la position de chacun de ces moyens de déplacement à partir de données fournies par un deuxième calculateur qui comprend un programme d'exécution des étapes du procédé. Le four comprend un chalumeau classique et une source laser.

Dans ce qui suit, une seule fibre sera utilisée pour simplifier la description, mais le procédé est applicable à un ensemble de plus d'une fibre.

D'autres particularités et avantages de l'invention apparaîtront à la lecture de la description faite à titre d'exemple illustratif et non limitatif en référence aux figures annexées qui représentent :

- la figure 1, les étapes du procédé selon l'invention,
- la figure 2, les étapes permettant de calculer les déplacements $dx_s$,
- la figure 3, le schéma d'un dispositif préféré de mise en oeuvre de l'invention,
- la figure 4, des exemples de différents profils obtenus après la mise en oeuvre du procédé,
- la figure 5, un profil de fibre effilée avec apparition d'un régime d'instabilité où le diamètre oscille et ne suit plus la loi en $f(x_s)$.

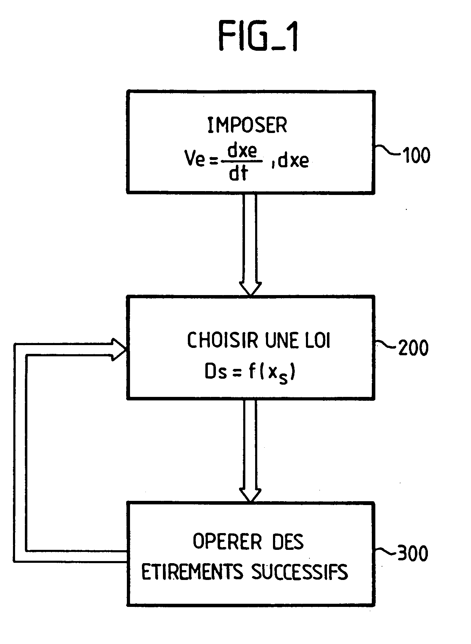

Une réalisation du procédé se fait en plusieurs étapes qui sont décrites dans la figure 1. Une première étape du procédé 100 a pour objet d'imposer une vitesse $V_e$ de défilement de la fibre à l'entrée du four. La vitesse $V_e$ peut s'écrire sous la forme d'une relation, telle que $V_e = dx_e/dt$, à partir de laquelle on en déduit $dx_e$. On peut choisir une loi simple d'évolution de la vitesse d'entrée de la fibre, soit par exemple

$$dx_e = \text{constante ou } dx_e = a + b.D_s.$$

Dans une deuxième étape 200, on choisit, selon le profil que l'on désire obtenir, une loi f de variation du diamètre $D_s$ de la fibre en sortie de four, en fonction des positions $x_s$, variables dans le temps, de la fibre en sortie de four, telle que :

$$D_s = f(x_s) \tag{1}.$$

Les profils que l'on désire obtenir dépendent des dispositifs que l'on veut réaliser. Pour réaliser des filtres modaux, par exemple, il faut dans un premier temps étirer la fibre selon une pente assez importante pour provoquer le couplage entre modes. On peut dans ce cas, utiliser une loi de variation linéaire. On diminue ensuite la pente pour atténuer les couplages parasites; il est alors préférable d'utiliser une loi de variation parabolique.

De manière plus générale, on pourra choisir différentes lois de variation que l'on appliquera les unes après les autres, sur des longueurs déterminées de fibre. Dans ce qui suit, on donnera des exemples de profils linéaires ou paraboliques ou de combinaison de profils linéaires et paraboliques. Mais ce ne sont que des exemples illustratifs, d'autres profils, décrits par une loi f ou des lois f et g de variation, peuvent être réalisés pour d'autres applications. Ainsi, par exemple, des profils exponentiels, ou des profils décrits par un ou plusieurs polynômes dérivables quelconques peuvent être réalisés.

Enfin, dans une dernière étape 300 on opère des étirements successifs pour modifier à chaque fois le diamètre $D_s$ de la fibre en sortie de four et suivre la loi f de variation.

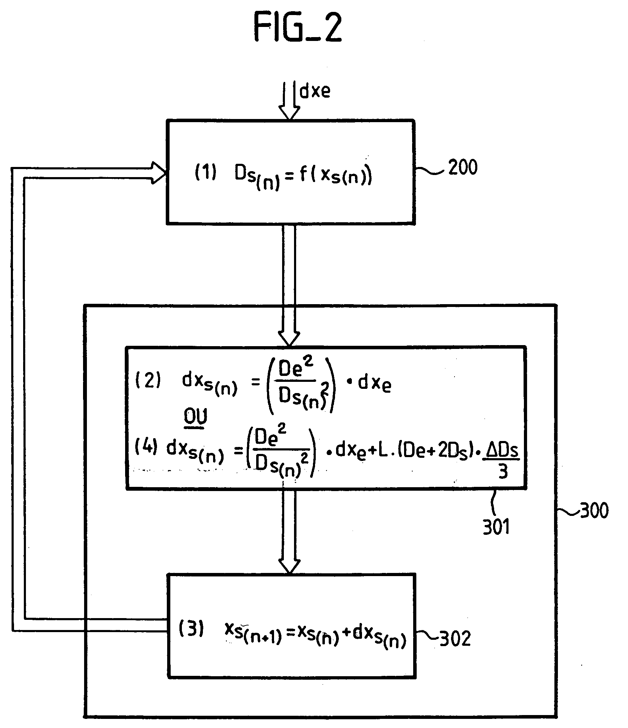

Les déplacements $dx_s$ de la fibre en sortie de four engendrant ces étirements sont calculés en plusieurs étapes illustrées sur la figure 2.

Pour calculer ces déplacements $dx_s$, on détermine, à partir de la loi de variation $D_s = f(x_s)$, une première valeur du diamètre $D_{s(n)}$ de la fibre en sortie de four en fonction de la première position $x_{s(n)}$ de la fibre en sortie de four 200.

On détermine ensuite le déplacement $dx_{s(n)}$ 300, pour réaliser un étirement de la fibre en sortie de four correspondant à cette valeur. Pour trouver la relation permettant de calculer la valeur du déplacement $dx_{s(n)}$, on part de la relation établissant l'égalité des volumes de matière entrantes et sortantes, soit: $D_e{}^2.V_e = D_s{}^2.V_s$, où $V_e$ est la vitesse de la fibre en entrée de four et $V_s$ est la vitesse de la fibre en sortie de four. Or les vitesses $V_e$ et $V_s$ peuvent aussi s'écrire de la façon suivante : $V_e = dx_e/dt$ et $V_s = dx_s/dt$. A partir de ces égalités, on aboutit, à l'étape 301, à une relation de $dx_s$ en fonction de la vitesse $dx_e$ de défilement de la fibre en entrée de four et du diamètre Ds de la fibre en sortie de four qui est la suivante :

$$dx_s = (D_e{}^2/D_s{}^2).dx_e \tag{2}$$

où

$D_e$ = Diamètre de la fibre en entrée de four
$D_s$ = Diamètre de la fibre en sortie de four
$dx_e$ = vitesse de la fibre en entrée de four

On détermine ensuite une nouvelle position $x_{s\,(n+1)}$ 302 de la fibre en sortie de four, par incrémentation de la valeur du déplacement $dx_{s(n)}$ précédemment calculé, selon la relation :

$$x_{s(n+1)} = x_{s(n)} + dx_{s(n)} \qquad (3)$$

On réitère les opérations successivement en appliquant les relations (1), (2), et (3) jusqu'à l'obtention du profil désiré.

Dans le cas d'un profil linéaire, on réitère par exemple les opérations jusqu'à l'obtention d'une valeur seuil fixée du diamètre $D_s$. Dans le cas d'un profil parabolique, on réitère par exemple les opérations jusqu'à l'obtention du diamètre initial ($D_s = D_e$) de la fibre.

On pourra appliquer le procédé qui vient d'être décrit dans le cas où les variations de volume de la zone de fibre fondue sont négligeables devant le volume de matière sortante.

Dans le cas contraire, on tiendra compte de préférence de ces variations de volume.

Pour tenir compte de ces variations on va par exemple considérer cette zone fondue comme un tronc de cône, le calcul de la variation de volume en fonction de celle du diamètre de sortie donne l'expression suivante : $\Delta V = (\Pi/12).L.(D_e+2D_s)\Delta D_s$ où L est la hauteur du tronc de cône, soit la largeur efficace du four. Cette expression conduit à une nouvelle relation de $dx_s$ :

$$dx_s = (D_e^{\,2}/D_s^{\,2}) \cdot dx_e + L. (D_e + 2D_s)\, \Delta D_s/3 \qquad (4)$$

qui remplace la relation (2) dans l'itération précédente 301. $\Delta D_s$, la variation du diamètre en sortie entre chaque itération, est obtenue à partir de la relation (1). Les variations de la hauteur L du tronc de cône en fonction de $D_s$ peuvent également être prises en compte ainsi que toute autres formes approchées de la zone de fibre fondue.

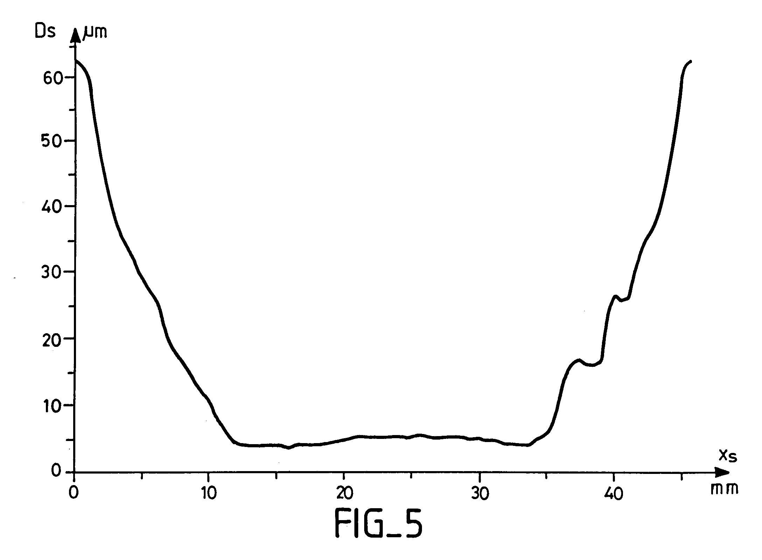

On constate que dans ce cas, lorsque le rapport $D_e/D_s$ atteint un seuil maximum, il peut se produire un régime d'instabilité, illustré sur la figure 5,où le diamètre oscille et ne suit plus la loi en $f(x_s)$. Dans ce cas, on réalise l'effilement en deux étapes. Dans une première étape, on tire sur la fibre jusqu'à atteindre une valeur de diamètre intermédiaire et on continue à tirer sur une longueur déterminée de manière à obtenir un cylindre. Dans une deuxième étape, on revient à l'origine du cylindre ainsi créé et on termine l'effilement selon le profil choisi.

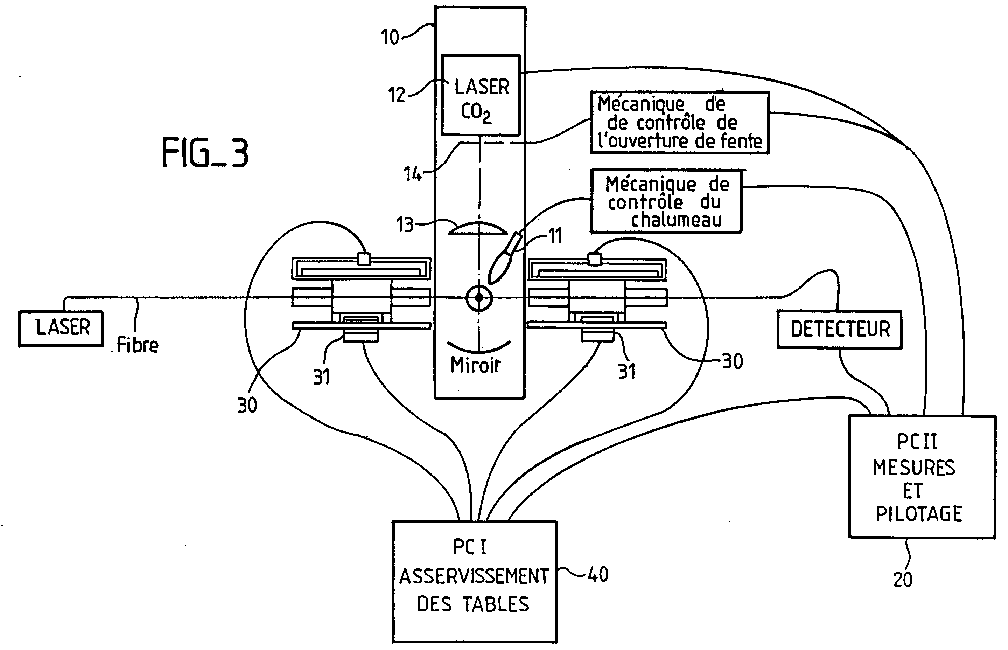

On va maintenant décrire un mode de réalisation préféré d'un dispositif de mise en oeuvre du procédé. Le schéma de ce dispositif est représenté sur la figure 3. Il comprend un moyen de chauffage des fibres, appelé four 10 et des moyens de déplacement 30 des fibres par rapport à ce four.

Le four 10 est constitué de deux éléments. D'une part, un micro-chalumeau 11 classique fonctionnant de préférence avec du butane, de l'oxygène et de l'azote qui est ajouté pour régler la température de flamme; d'autre part une source laser 12. Cette source laser 12 comporte de préférence un laser à $CO_2$. Le chalumeau permet de chauffer la fibre jusqu'à sa température de ramollissement; ceci permet de relâcher, avant l'effilage de la fibre, les contraintes et déformations éventuelles dues au procédé de fixation des fibres. Le laser à $CO_2$ permet de porter à température de fusion une longueur minimum de fibre. Un moyen de focalisation de la source laser 12 est de préférence constitué par une lentille cylindrique 13 associée à un miroir sphérique. Ce miroir sphérique permet de refocaliser le rayonnement du faisceau laser, qui se divise de part et d'autre de la fibre lorsqu'il rencontre cette dernière, sur le côté de la fibre situé à l'opposé de la source laser par rapport à l'axe de défilement.

Une lunette, non représentée sur la figure, permet de repérer la température de la fibre par sa brillance. Cette mesure permet de réguler la puissance fournie par le laser $CO_2$ au moyen d'une fente 14 dont l'ouverture est asservie par une mécanique de contrôle, elle-même pilotée par le calculateur PCII 20.

Dans une autre variante, une autre mécanique de contrôle, pilotée par le calculateur PCII 20, asservi le débit gazeux du chalumeau pour modifier la largeur de flamme.

L'utilisation conjointe de ces deux moyens de chauffage permet d'aboutir à une largeur efficace de four minimum tout en réduisant, autant que possible, les effets de souffles dûs au chalumeau et de créer un point le plus chaud dans le four. On peut donc déterminer l'origine sur l'axe des déplacements de la fibre, à partir du point le plus chaud du four ainsi créé.

L'ensemble chalumeau plus optique de focalisation du laser est mobile perpendiculairement à l'axe de la fibre. Sa mise en place et son retrait, au début et à la fin du processus de tirage, sont assurés par le calculateur PCII 20, qui comprend une commande de déplacement et une commande d'allumage du laser.

Le déplacement de la fibre est assuré par des moyens de déplacement comprenant, de préférence, deux tables à coussin d'air 30 de façon à réduire l'influence des frottements. La position de chaque table est repérée par des moyens habituels sur les machines outils, avec une résolution de $0,1\mu m$. Leurs mouvements sont assurés par un moteur 31 linéaire dont le bobinage est fixe et la carcasse mobile. Ceci évite les vibrations mécaniques et permet à l'équipage mobile de n'avoir aucune connexion électrique susceptible de gêner son déplacement. Les deux moteurs sont pilotés par un premier calculateur PCI 40 qui asservi la position de chaque table à partir de données fournies par un deuxième calculateur PCII 20 qui comprend un programme d'exécution des étapes du procédé. L'ensemble des positions des tables peut être mis en mémoire vive du calculateur, avant l'étirage de la fibre, au moyen d'un programme de calcul utilisant les relations (1), (2), (3) et (4) précédemment décrites.

La force de traction appliquée sur la fibre peut en outre être mesurée par ce même calculateur PCII 20. Elle est initialisée au départ de façon à tenir compte de la dilatation de la fibre lors de la mise en place du four.

Les échanges entre calculateurs, et les mesures sont réalisées par le biais des ports d'entrée/sortie sans protocole d'échange pour ne pas ralentir la fabrication des dispositifs en fibres étirées.

Selon une autre variante préférée de l'invention, on peut fixer un laser à un bout de la fibre, pour injecter des impulsions de lumière dans la fibre, et fixer un détecteur, relié au calculateur PCII (20), à l'autre bout de la fibre pour contrôler les phénomènes qui existent à la sortie de celle-ci lors de l'étirage.

Grâce à ce procédé de fabrication de fibres étirées, on peut réaliser toutes sortes de profils selon les dispositifs que l'on souhaite obtenir.

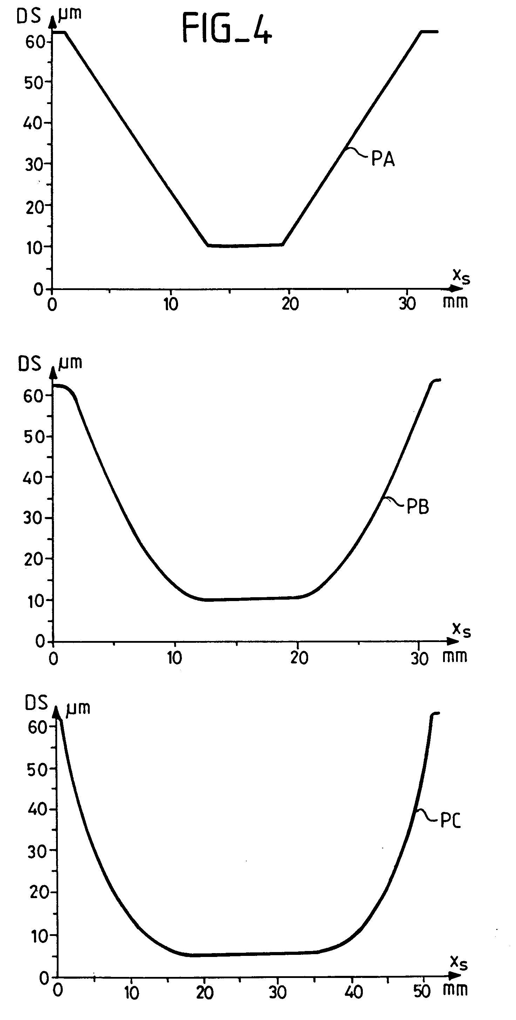

Dans cette description, on a choisit de donner des exemples de quelques profils. Ces exemples, qui sont illustratifs mais non limitatifs, sont rassemblés sur la figure 4.

La courbe PA représente un profil linéaire obtenu en utilisant l'équation d'une droite pour la loi f de variation.

La courbe PB représente un profil parabolique obtenu en utilisant l'équation d'une parabole pour la loi f de variation.

La courbe PC représente un profil pour lequel il y a une combinaison de différentes lois appliquées successivement sur des longueurs déterminées de fibre. Le profil est linéaire sur une portion de fibre et correspond à l'équation d'une droite choisie pour la loi f de variation, puis le profil est parabolique sur une autre portion de fibre et correspond à l'équation d'une parabole choisie pour la loi g de variation, et enfin le profil est linéaire sur une troisième portion de fibre et correspond à l'équation d'une droite choisie pour la loi f de variation.

## Revendications

1. Procédé d'étirage contrôlé d'une ou plusieurs fibres optiques comportant les étapes suivantes :

   - imposer une vitesse $V_e = dx_e/dt$ de défilement de la fibre entrant dans un four, où $dx_e$ représente le déplacement de la fibre en entrée de four,
   - choisir une loi f de variation du diamètre Ds de la fibre en sortie de four telle que $D_s = f(x_s)$ dans laquelle $x_s$ représente les positions, variables dans le temps, de la fibre en sortie de four,
   - calculer, par incrémentations successives, des déplacements $dx_s$ de la fibre en sortie de four de manière à opérer des étirements sur la fibre pour modifier à chaque fois le diamètre $D_s$ de la fibre en sortie de four, de façon à suivre le profil défini par la loi f de variation,

   et dans lequel, pour opérer ces étirements sur la fibre,

   - on détermine une première valeur du diamètre $D_s$ de la fibre en sortie de four, à partir de la loi f établie, en fonction de la position $x_s$ de la fibre en sortie de four,
   - on détermine le déplacement $dx_s$ pour réaliser un étirement de la fibre en sortie de four correspondant à cette valeur, à partir de la valeur de la vitesse $dx_e$ de défilement de la fibre en entrée de four et de la valeur du diamètre $D_s$ précédemment calculé,
   - on détermine une nouvelle position $x_s$ de la fibre en sortie de four par incrémentation de la valeur du déplacement $dx_s$ précédemment calculée,
   - on réitère les opérations jusqu'à l'obtention du profil désire.

2. Procédé d'étirage contrôlé d'une ou plusieurs fibres optiques selon la revendication 1, caractérisé en ce que la relation permettant de calculer la valeur du déplacement $dx_s$ est la suivante :

$$dx_s = (D_e{}^2/D_s{}^2).dx_e,$$

   dans laquelle $D_e$ représente la valeur du diamètre de la fibre en entrée de four.

3. Procédé d'étirage contrôlé d'une ou plusieurs fibres optiques selon la revendication 1, caractérisé en ce que la relation permettant de calculer la valeur du déplacement $dx_s$ est la suivante :

$$dx_s = (D_e{}^2/D_s{}^2).dx_e + L(D_e + 2.D_s)\Delta Ds/3,$$

   dans laquelle $\Delta Ds$ représente la variation du diamètre de la fibre en sortie de four.

4. Procédé d'étirage contrôlé d'une ou plusieurs fibres optiques selon la revendication 1, caractérisé en ce que l'on choisit une loi f de variation de manière à l'appliquer sur une première longueur de fibre, et on choisit une autre loi g de variation de manière à l'appliquer sur une deuxième longueur de fibre.

5. Procédé d'étirage contrôlé d'une ou plusieurs fibres optiques selon l'une des revendications 1 à 4, caractérisé en ce que la loi f ou les lois f et g de variation sont des équations de courbes dérivables dans l'intervalle de calcul du diamètre de la fibre.

6. Procédé d'étirage contrôlé d'une ou plusieurs fibres optiques selon les revendications 4 ou 5, caractérisé en ce que la loi f de variation est l'équation d'une droite et la loi g de variation est l'équation d'une parabole.

7. Procédé d'étirage contrôlé d'une ou plusieurs fibres optiques selon l'une quelconque des revendications précédentes, caractérisé en ce que l'origine sur l'axe des déplacements de la fibre est déterminée à partir du point le plus chaud du four.

8. Dispositif de mise en oeuvre du procédé selon l'une quelconque des revendications précédentes comprenant un four (10) et des moyens de déplacement de la fibre pilotés par un premier calculateur, caractérisé en ce qu'il comporte un deuxième calculateur (20) et en ce que ledit premier calculateur (40) asservi la position de chacun de ces moyens de déplacement (30) à partir de données fournies par le deuxième calculateur (20) qui comprend un programme d'exécution des étapes du procédé.

9. Dispositif selon la revendication 8, caractérisé en ce que le four (10) est constitué d'un chalumeau (11) et d'une source laser (12).

10. Dispositif selon l'une des revendications 8 à 9, caractérisé en ce que la source laser (12) est un laser à $CO_2$.

## Claims

1. A controlled drawing method for producing one or more optical fibres comprising the following steps:

   - a running speed $V_e = dx_e/dt$ is applied to the fibre as it enters an oven, where $dx_e$ represents the displacement of the fibre at the input of the oven,
   - a law f is selected for the variation in the diameter Ds of the fibre at the output of the oven such that $D_s = f(x_s)$ where $x_s$ represents the positions, variable in time, of the fibre at the output of the oven,
   - the displacements $dx_s$ of the fibre at the output of the oven are calculated by means of successive increments so that the each of the drawing actions applied at the output of the oven modifies the diameter $D_s$ of the fibre such that it will conform to the profile defined by the law of variation f,

   and in which, in order to apply these drawing actions to the fibre

   - a first value $D_s$ of the diameter of the fibre at the output of the oven is defined, on the basis of the law f, as a function of the position $x_s$ of the fibre at the output of the oven,
   - the displacement $dx_s$ is determined so that the fibre at the output of the oven is drawn such that it complies with this value, based on the value of the running speed $dx_e$ of the fibre at the input of the oven and the value of the diameter $D_s$ previously calculated,
   - a new position $x_s$ of the fibre at the output of the oven is determined by incrementing the value of the previously calculated displacement value $dx_s$,
   - the operations are repeated until the desired profile has been produced.

2. A controlled drawing method for producing one or more optical fibres as claimed in claim 1, characterised in that the relationship allowing the displacement value $dx_s$ to be calculated is as follows:

$$dx_s = (D_e^2/D_s^2).dx_e,$$

where $D_e$ represents the value of the diameter of the fibre at the input of the oven.

3. A controlled drawing method for producing one or more optical fibres as claimed in claim 1, characterised in that the relationship allowing the displacement value $dx_s$ to be calculated is as follows:

$$dx_s = (D_e{}^2/D_s{}^2).dx_e + L(D_e + 2.D_s)\Delta Ds/3,$$

where $\Delta Ds$ represents the variation in the diameter of the fibre at the output of the oven.

4. A controlled drawing method for producing one or more optical fibres as claimed in claim 1, characterised in that a law of variation f is selected and applied over a first length of fibre and another law of variation g is selected and applied over a second length of fibre.

5. A controlled drawing method for producing one or more optical fibres as claimed in one of claims 1 to 4, characterised in that the law of variation f or the laws of variation f and g are equations of curves which can be derived within the calculating range of the diameter of the fibre.

6. A controlled drawing method for producing one or more optical fibres as claimed in claims 4 or 5, characterised in that the law of variation f is the equation of a straight line and the law of variation g is the equation of a parabola.

7. A controlled drawing method for producing one or more optical fibres as claimed in one of the preceding claims, characterised in that the starting point of the displacements of the fibre along the axis is determined on the basis of the hottest part of the oven.

8. A device for implementing the method as claimed in any one of the preceding claims, comprising an oven (10) and means for displacing the fibre driven by a first computer, characterised in that it has a second computer (20) and the said first computer (40) controls the position of each of these displacement means (30) on the basis of data supplied by the second computer (20) which has a programme for running the steps of the method.

9. A device as claimed in claim 8, characterised in that the oven (10) consists of a blowpipe (11) and a laser source (12).

10. A device as claimed in one of claims 8 to 9, characterised in that the laser source (12) is a $CO_2$ laser.

## Patentansprüche

1. Verfahren zum kontrollierten Strecken von einer oder mehreren optischen Fasern, das die folgenden Schritte umfaßt:

    - Einstellen einer Vorbeilaufgeschwindigkeit $V_e = dx_e/dt$ der sich in einen Ofen hineinbewegenden Faser, wobei $dx_e$ die Verschiebung der Faser am Ofeneingang ist,
    - Wählen eines Änderungsgesetzes f des Durchmesser Ds der Faser am Ausgang des Ofens, z.B. $D_s = f(x_s)$, wobei $x_s$ die zeitlich variablen Positionen der Faser am Ofenausgang darstellt,
    - Berechnen, durch sukzessives Inkrementieren, der Verschiebungen $dx_s$ der Faser am Ofenausgang, um an der Faser Streckungen zu bewirken, so daß sich der Durchmesser $D_s$ der Faser am Ofenausgang jedesmal verändert, um dem durch das Änderungsgesetz f definierten Profil nachzufolgen,

    und bei dem, um diese Streckungen an den Fasern zu bewirken,

    - man mit dem festgelegten Gesetz f in Abhängigkeit von der Position $x_s$ der Faser am Ofenausgang einen ersten Wert des Durchmessers $D_s$ der Faser am Ofenausgang bestimmt,
    - man aus dem Wert der Laufgeschwindigkeit $dx_e$ der Faser am Ofeneingang und dem vorhergehend berechneten Wert des Durchmessers $D_s$ die Verschiebung $dx_s$ bestimmt, um am Ofenausgang eine diesem Wert entsprechende Streckung der Faser herzustellen,
    - man durch Inkrementieren des vorhergehend berechneten Werts der Verschiebung $dx_s$ eine neue Position $x_s$ der Faser am Ofenausgang bestimmt,
    - man diese Operationen wiederholt, bis man das gewünschte Profil erhält.

2. Verfahren zum kontrollierten Strecken von einer oder mehreren optischen Fasern nach Anspruch 1, dadurch gekennzeichnet, daß die Relation zum Berechnen des Verschiebungswerts $dx_s$ die folgende ist:

$$dx_s = (D_e{}^2/D_s{}^2).dx_e,$$

in der $D_e$ den Wert des Durchmessers der Faser am Ofeneingang ist.

3. Verfahren zum kontrollierten Strecken von einer oder mehreren optischen Fasern nach Anspruch 1, dadurch gekennzeichnet, daß die Relation zum Berechnen des Verschiebungswert $dx_s$ die folgende ist:

$$dx_s = (D_e{}^2/D_s{}^2).dx_e + L(D_e + 2.D_s)\,\Delta Ds/3,$$

in der $\Delta Ds$ die Durchmesseränderung der Faser am Ofenausgang ist.

4. Verfahren zum kontrollierten Strecken von einer oder mehreren optischen Fasern nach Anspruch 1, dadurch gekennzeichnet, daß man ein Änderungsgesetz f wählt, um es auf eine erste Faserlänge anzuwenden, und ein weiteres Änderungsgesetz g, um es auf eine zweite Faserlänge anzuwenden.

5. Verfahren zum kontrollierten Strecken von einer oder mehreren optischen Fasern nach einem der Ansprüche 1 bis 4, dadurch gekennzeichnet, daß das Änderungsgesetz f oder die Änderungsgesetze f und g Gleichungen von Kurven sind, ableitbar in dem Berechnungsintervall des Durchmessers der Faser.

6. Verfahren zum kontrollierten Strecken von einer oder mehreren optischen Fasern nach einem der Ansprüche 4 oder 5, dadurch gekennzeichnet, daß das Änderungsgesetz f die Gleichung einer Geraden ist und das Änderungsgesetz g die Gleichung einer Parabel ist.

7. Verfahren zum kontrollierten Strecken von einer oder mehreren optischen Fasern nach einem der vorangehenden Ansprüche, dadurch gekennzeichnet, daß der Nullpunkt auf der Achse der Verschiebungen der Faser am heißesten Punkt des Ofens festgelegt wird.

8. Vorrichtung nach einem der vorangehenden Ansprüche, einen Ofen (10) umfassend und Fadenverschiebungseinrichtungen, gesteuert durch einen ersten Rechner, dadurch gekennzeichnet, daß sie einen zweiten Rechner (20) umfaßt, und dadurch, daß besagter erster Rechner (40) die Position bzw. Stellung von jeder dieser Verschiebungseinrichtungen (30) aus Angaben bzw. Daten kennt, die geliefert werden durch den zweiten Rechner (20), der ein Programm zur Ausführung der Programmschritte enthält.

9. Vorrichtung nach Anspruch 8, dadurch gekennzeichnet, daß der Ofen (10) gebildet wird durch einen Brenner (11) und eine Laserquelle (12).

10. Vorrichtung nach einem der Ansprüche 8 bis 9, dadurch gekennzeichnet, daß die Laserquelle (12) ein $CO_2$-Laser ist.

# FIG_1

IMPOSER

$$Ve = \frac{dxe}{dt} \; , dxe$$

~100

CHOISIR UNE LOI

$$Ds = f(x_s)$$

~200

OPERER DES
ETIREMENTS SUCCESSIFS

~300

# FIG_2

$dxe$

$(1) \quad D_{s(n)} = f(x_{s(n)})$  — 200

$$(2) \quad dx_{s(n)} = \left(\frac{De^2}{Ds_{(n)}^2}\right) \cdot dx_e$$

$\underline{OU}$

$$(4) \quad dx_{s(n)} = \left(\frac{De^2}{Ds_{(n)}^2}\right) \cdot dx_e + L \cdot (De + 2D_s) \cdot \frac{\Delta Ds}{3}$$

301

300

$(3) \quad x_{s(n+1)} = x_{s(n)} + dx_{s(n)}$  —302

FIG_3

LASER CO₂

10

12

14

13

11

Miroir

Mécanique de de contrôle de l'ouverture de fente

Mécanique de contrôle du chalumeau

LASER

Fibre

31

30

31

30

DETECTEUR

PC I ASSERVISSEMENT DES TABLES

40

PC II MESURES ET PILOTAGE

20

EP 0 714 861 B1

FIG_4

FIG_5